# EUROPÄISCHE PATENTSCHRIFT

(11) **EP 4 077 840 B1**
(45) Veröffentlichungstag und Bekanntmachung des Hinweises auf die Patenterteilung: **30.09.2026**
(21) Anmeldenummer: 21712785.1
(22) Anmeldetag: 15.03.2021
(51) Int. Cl.: E05B 17/20, B62H 5/00, H01M 50/264, B62J 43/13, B62J 43/23, B62J 45/00, B62M 6/90, G07C 9/00, H01M 50/249, E05B 47/00, E05B 71/00, E05B 13/00, E05B 63/00, E05C 1/08, E05C 3/12, B62H 5/14, B62H 5/18, B62J 9/30

(54) **SCHLOSS**
LOCK
SERRURE

(30) Priorität: 17.03.2020 DE 102020107214; 09.03.2021 DE 102021105647
(43) Veröffentlichungstag der Anmeldung: 26.10.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB
(86) Internationale Anmeldenummer: PCT/EP2021/056563
(87) Internationale Veröffentlichungsnummer: WO 2021/185779

(56) Entgegenhaltungen:
- WO-A1-2016/173804
- CN-A- 109 424 275
- CN-B- 106 114 694

## Beschreibung

Die Erfindung betrifft ein Schloss, wie beispielsweise eine Vorrichtung zum Sichern eines Energiespeichers, ein Rahmenschloss, ein Bremsscheibenschloss, oder ein Kofferschloss, insbesondere für ein Elektrofahrrad, mit einem Verriegelungsmechanismus, welcher einen Riegel aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist.

Ein derartiges Schloss ist grundsätzlich bekannt und kommt beispielsweise zum Einsatz, um einen Energiespeicher im Bereich eines Gepäckträgers oder an einem Rahmenrohr eines Elektrofahrrads gegen Verlust oder Diebstahl zu sichern. Üblicherweise weist eine solche Vorrichtung einen Schließzylinder auf, der mit einem Schlüssel betätigbar ist. Für gewöhnlich wird bei Betätigung des Schließzylinders ein Riegel bewegt, der den Energiespeicher in einer Verriegelungsposition sichert bzw. in einer Entriegelungsposition freigibt. Dabei wird der Riegel üblicherweise durch ein vergleichsweise starkes Federelement in die Verriegelungsposition gedrängt. So kann eine versehentliche Bewegung des Riegels in die Entriegelungsposition vermieden werden, beispielsweise auch in Gegenwart von Erschütterungen, wie sie bei Fahrt über unebenes Gelände entstehen. Um den Energiespeicher aus der Vorrichtung entfernen zu können, beispielsweise um einen Ladevorgang durchzuführen, muss ein Nutzer zur Entriegelung des Verriegelungsmechanismus einen Schlüssel mitführen. In ähnlicher Weise werden auch andere Schlösser wie Rahmenschlösser, Bremsscheibenschlösser, Schlösser eines Transportkoffers oder einer Transportbox, d.h. Kofferschlösser, mittels eines Schlüssels geöffnet und/oder geschlossen.

Aus der CN 109 424 275 A ist ein Rahmenschloss für ein Elektrofahrrad bekannt, das einen Riegel zum Durchführen durch ein Rad des Elektrofahrrads aufweist. Der Riegel kann manuell in eine Verriegelungsposition geführt und in dieser mittels eines Schließkörpers gesichert werden. Sobald eine Kommunikationseinheit des Schlosses ein Entriegelungssignal empfängt, wird der Schließkörper in eine Freigabeposition bewegt, woraufhin der Riegel durch eine Feder in seine Entriegelungsposition zurückgezogen wird.

Die Druckschrift WO 2016/173804 A1 offenbart ein Rahmenschloss mit einem motorisch zwischen einer Verriegelungsposition und einer Entriegelungsposition verstellbaren Riegel. Ein Hubmagnetbolzen ist dazu vorgesehen, in Aussparungen des Riegels einzugreifen und diesen jeweils in der Verriegelungsposition sowie in der Entriegelungsposition zu sichern.

In der Druckschrift CN 106 114 694 B ist ein Lenkradschloss für ein Fahrrad oder Motorrad beschrieben. Das Schloss weist einen Riegel auf, der in seiner Verriegelungsposition durch eine Schließöffnung eines Lenkerrohrs geführt wird, wo er durch eine Schließplatte gesichert wird. Wird die Schließplatte mittels eines Motors in ihre Freigabestellung gebracht, so zieht eine Feder den Riegel aus der Verriegelungsposition in seine Entriegelungsposition zurück.

Der Erfindung liegt die Aufgabe zugrunde, ein Schloss zu schaffen, das sich durch einen erhöhten Bedienkomfort, eine erhöhte Sicherheit und dennoch eine besonders kompakte Bauform auszeichnet.

Die Aufgabe wird durch ein Schloss, insbesondere für ein Elektrofahrrad, mit den Merkmalen des Anspruchs 1 gelöst und insbesondere dadurch, dass das Schloss einen Verriegelungsmechanismus mit einem Riegel aufweist, wobei der Riegel zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist. Das Schloss weist ferner eine Sperreinrichtung auf, welche ein Sperrelement umfassend, das zwischen einer Sperrstellung, in welcher der Riegel in seiner Verriegelungsposition gesperrt ist, und einer Freigabestellung verstellbar ist, in welcher der Riegel in seine Entriegelungsposition bewegbar ist. Zudem umfasst das Schloss eine Empfangseinheit zum Empfangen eines Freigabesignals, durch das die Verstellung des Sperrelements in die Freigabestellung bewirkbar ist.

Das bewegbare Gegenstück kann beispielsweise ein Energiespeicher oder Bestandteil eines Energiespeichers oder ein Kloben eines Rahmenschlosses oder Bremsscheibenschlosses oder ein Schließbügel oder eine Klinke eines Kofferschlosses, jeweils insbesondere eines Elektrofahrrads, sein.

Bei dem Schloss kann es sich beispielsweise um eine Vorrichtung zum Sichern eines Energiespeichers, insbesondere für ein Elektrofahrrad, handeln, welche einen Verriegelungsmechanismus umfasst, welcher einen Riegel aufweist, der zwischen einer Verriegelungsposition, in welcher er mit dem Energiespeicher diesen sichernd zusammenwirkt, und einer Entriegelungsposition bewegbar ist, in welcher er die Entnahme des Energiespeichers erlaubt. Die Vorrichtung weist zudem eine Sperreinrichtung auf, welche ein Sperrelement umfasst, das zwischen einer Sperrstellung, in welcher der Riegel in seiner Verriegelungsposition gesperrt ist, und einer Freigabestellung verstellbar ist, in welcher der Riegel in seine Entriegelungsposition bewegbar ist. Dabei umfasst die Sperreinrichtung eine Empfangseinheit zum Empfangen eines Freigabesignals, durch das die Verstellung des Sperrelements in die Freigabestellung bewirkbar ist.

Die Erfindung sieht also insgesamt zwei Sicherungs- bzw. Freigabeschritte vor, um den Energiespeicher in der Vorrichtung zu sichern bzw. ihn daraus zu entnehmen. Einerseits sichert der Verriegelungsmechanismus mittels des Riegels unmittelbar den Energiespeicher, andererseits blockiert in der Verriegelungsstellung ein Sperrelement den Verriegelungsmechanismus, sodass eine Betätigung desselben erst nach Verstellen des Sperrelements in die Freigabestellung möglich ist. Somit ist ein erhöhter Schutz gegen Verlieren gewährleistet, da ein versehentliches Bewegen des Riegels in die Entriegelungsposition, beispielsweise bei einer Fahrt über unebenes Gelände, durch das Sperrelement umso wirksamer verhindert wird. Auch der Schutz gegen unberechtigte Entnahme bzw. Diebstahl des Energiespeichers kann durch die erfindungsgemäße Vorrichtung erhöht werden. Zudem ist eine flexiblere Gestaltung des Sicherungs- bzw. Entnahmeprozesses möglich, wobei insbesondere eine schlüssellose Bedienung des Verriegelungsmechanismus vorgesehen sein kann: Beispielsweise kann der Verriegelungsmechanismus manuell entriegelbar sein, nachdem die Sperreinrichtung durch Empfang eines Freigabesignals in die Freigabestellung gebracht wurde. Eine unmittelbare Erhöhung des Bedienkomforts ist die Folge, da zur Entriegelung kein physischer Schlüssel mehr mitgeführt werden muss.

Eine solche Vorrichtung kann zur Sicherung beispielsweise einer Batterie oder eines Akkumulators an einem Elektrofahrzeug eingesetzt werden, insbesondere an einem Elektrofahrrad, elektrischen Rollstuhl, Elektroroller oder Elektrokart. Dabei kann die Vorrichtung wiederum an einer beliebigen geeigneten Stelle des Elektrofahrzeugs angebracht sein.

Ferner kann das Schloss ein Rahmenschloss, ein Bremsscheibenschloss, ein Schloss eines Transportkoffers oder einer Transportbox, d.h. ein Kofferschloss sein, insbesondere eines Elektrofahrrads, elektrischen Rollstuhls, Elektrorollers oder Elektrokarts. Das Schloss kann beispielsweise mittels eines als Kugel, Walze, Stift, Bügel oder Klinke ausgebildeten Riegels verriegelt werden. Ein Gegenstück, das an dem Schloss selbst, an dem Rahmen, der Bremsscheibe, dem Elektrofahrzeug oder dem Koffer angebracht sein kann, kann im Verriegelungszustand mit dem Verriegelungsmechanismus in Eingriff gebracht werden, sodass ein Entfernen des Gegenstücks aus dem Schloss und somit ein Öffnen des Schlosses verhindert wird.

Auch für ein derartiges Schloss sind erfindungsgemäß zwei Sicherungs- bzw. Freigabeschritte vorgesehen, um das Schloss zu öffnen bzw. zu schließen, wobei in der Verriegelungsstellung der Verriegelungsmechanismus mittels des Riegels das Schloss geschlossen hält, während das Sperrelement den Verriegelungsmechanismus blockiert, sodass eine Betätigung desselben und somit ein Öffnen des Schlosses erst nach Verstellen des Sperrelements in die Freigabestellung möglich ist. Damit gehen ein erhöhter Schutz gegen unbeabsichtigtes Öffnen des Schlosses und gegen unberechtigtes Öffnen bzw. Diebstahl einher, während eine schlüssellose Bedienung den Bedienkomfort erhöht.

Das Sperrelement kann nach dem Schließen des Riegels in seine Sperrstellung verstellt werden. Die Verstellung des Sperrelements kann durch Informationen einer Sensoreinrichtung, durch Ablauf einer bestimmten Zeitdauer oder durch ein Sperrsignal ausgelöst werden. Eine Sensoreinrichtung kann dazu vorgesehen sein, die Anwesenheit des Gegenstücks in dem Schloss und/oder die Anwesenheit eines mobilen Endgeräts eines Nutzers zu detektieren.

Beispielsweise kann nach dem Einsetzen des Energiespeichers in die Vorrichtung eine Verstellung des Sperrelements in seine Sperrstellung erfolgen.

Beispielsweise kann eine Sensoreinrichtung zur Detektion eines Energiespeichers in der Vorrichtung umfasst sein, sodass ein selbsttätiges Verstellen des Sperrelements in die Sperrstellung bei Erkennung eines eingesetzten Energiespeichers erfolgt. Es kann auch vorgesehen sein, dass das Sperrelement nach Ablauf einer bestimmten Zeitdauer ab einer Betätigung des Riegels durch die Sperreinrichtung in die Sperrstellung verstellt wird. Alternativ oder zusätzlich kann vorgesehen sein, dass ein Sperrsignal, das beispielsweise durch einen Nutzer an die Empfangseinheit der Sperreinrichtung übermittelt wird, die Verstellung des Sperrelements in die Sperrstellung auslöst. Die Sperreinrichtung kann auch dazu eingerichtet sein, mittels der Empfangseinrichtung ein mobiles Endgerät eines Nutzers zu erkennen. In diesem Fall kann beispielsweise auch eine Verstellung des Sperrelements in die Sperrstellung erfolgen, sobald der Kontakt zu dem mobilen Endgerät abbricht, z.B. wenn sich dieses aus dem Empfangsbereich der Sperreinrichtung herausbewegt.

Das Sperrelement kann riegelartig oder bolzenartig ausgebildet sein. Beispielsweise kann das Sperrelement einen Stift umfassen, insbesondere aus Metall. Alternativ oder zusätzlich kann das Sperrelement zumindest eine Kugel, eine abgeflachte Kugel oder eine Walze umfassen.

Vorteilhafterweise kann das Sperrelement derart angeordnet sein, dass es bei geschlossenem und/oder verriegeltem Schloss abgedeckt und nicht von außen zugänglich ist. Insbesondere kann das Sperrelement bzw. die Sperreinrichtung in der Vorrichtung zum Sichern eines Energiespeichers derart angeordnet sein, dass die Sperreinrichtung bei eingesetztem Energiespeicher durch diesen abgedeckt wird und somit nicht von außen zugänglich ist. Dadurch kann eine unbefugte Manipulation der Sperreinrichtung erschwert werden.

Gemäß einer Ausführungsform umfasst die Sperreinrichtung einen Aktor, insbesondere einen elektromechanischen oder elektromagnetischen Aktor, zur Verstellung des Sperrelements. Ein entsprechend ausgestaltetes Sperrelement kann somit elektrisch zwischen der Freigabestellung und der Sperrstellung verstellt werden, was eine manuelle Verstellung durch einen Nutzer entbehrlich macht und somit zu einer Erhöhung des Bedienkomforts beiträgt. Da durch den Aktor lediglich das Sperrelement aber nicht der Verriegelungsmechanismus betätigt wird, kann schon ein Aktor mit geringer Leistung zur Verstellung des Sperrelements ausreichen, sodass vorteilhafterweise ein beispielsweise elektromotorischer Aktor mit kompakter Abmessung einsetzbar ist. Es kann auch ein elektromagnetischer Aktor vorgesehen sein, der mittels Magnetkraft auf das Sperrelement wirkt, um den Verriegelungsmechanismus in der Verriegelungsposition zu blockieren.

Die Empfangseinheit und das zu empfangende Freigabesignal können auf vielfältige Weise ausgebildet sein. Denkbar ist beispielsweise eine drahtgebundene Ausgestaltung der Empfangseinheit als Bedientaste, die durch einen Nutzer betätigbar ist, wobei die Betätigung der Taste dem Freigabesignal entspricht.

Die Empfangseinheit kann für einen drahtlosen Signalempfang ausgebildet sein und insbesondere ein Bluetooth-Modul, RFID-Modul und/oder WLAN-Modul aufweisen. Die Empfangseinheit kann somit drahtlos ein Freigabesignal empfangen, das ein Nutzer beispielsweise mittels eines mobilen Endgeräts versendet, insbesondere wenn er sich der Vorrichtung nähert. Vorteilhafterweise kann die Sperreinrichtung auf diese Art schlüssellos betätigbar sein. Das Senden des Freigabesignals kann dabei entweder aktiv durch eine Nutzereingabe an dem mobilen Endgerät erfolgen oder durch ein automatisiertes Protokoll, welches das Freigabesignal ohne Nutzereingabe nach Detektion der Vorrichtung sendet. Die Empfangseinheit kann zudem auch zum Senden von Daten ausgebildet sein, sodass Daten zwischen der Vorrichtung und dem mobilen Endgerät des Nutzers, sowie gegebenenfalls mit weiteren elektronischen Geräten, ausgetauscht werden können.

Die Sperreinrichtung kann ein Authentifizierungsmodul zur Authentifizierung eines empfangenen Freigabesignals umfassen. So kann ein berechtigter Nutzer authentifiziert werden und beispielsweise nur bei einem positiven Resultat der Authentifizierung die Sperreinrichtung aktiviert und das Sperrelement in die Freigabestellung verstellt werden. Beispielsweise kann das Authentifizierungsmodul zur drahtlosen Authentifizierung eines Nutzers ausgebildet sein, insbesondere mittels eines Austauschs elektronischer Schlüssel via Bluetooth, WLAN, RFID oder anderer bekannter Verfahren. Denkbar ist auch eine drahtgebundene Authentifizierung an der Vorrichtung oder dem Elektrofahrzeug selbst, beispielsweise mittels eines Fingerabdrucksensors, PIN Eingabe oder mittels eines anderen, insbesondere biometrischen, Verfahrens.

Der Verriegelungsmechanismus kann ein Betätigungsmittel für eine manuelle Bewegung des Riegels in die Entriegelungsposition aufweisen. Einerseits können als Betätigungsmittel ein Schließzylinder und ein zugehöriger Schlüssel vorgesehen sein. Andererseits kann zumindest ein schlüssellos betätigbares Betätigungsmittel für eine manuelle Bewegung des Riegels in die Entriegelungsposition vorgesehen sein, um den Bedienkomfort zu erhöhen.

Der Riegel kann verschiebbar und/oder verdrehbar gelagert sein.

Ferner kann eine rotatorische und/oder eine translatorische Betätigungsbewegung zur Bewegung des Riegels vorgesehen sein. Beispielsweise kann das Betätigungsmittel einen Druckknopf und/oder einen Schieber zur Übertragung einer linearen Betätigungsbewegung auf den Riegel umfassen, um diesen zwischen der Verriegelungsposition und der Entriegelungsposition zu bewegen. Alternativ zu einem Drücken kann auch ein Ziehen an dem Betätigungsmittels vorgesehen sein. Die Bewegung kann unmittelbar auf den Riegel übertragen werden oder auch mittels eines Getriebes, insbesondere mittels einer Kulissenführung, einer Steuerschräge, einer Schubstange, oder grundsätzlich mittels einer gelenkigen Verbindung in eine Bewegung des Riegels umgewandelt werden. Die Bewegung des Riegels kann in Richtung und/oder Betrag von der Betätigungsrichtung des Betätigungsmittels abweichen. Das Betätigungsmittel kann ferner einen Hebel umfassen, durch dessen Betätigung eine Bewegung des Riegels in die Entriegelungsposition erfolgt. Die durch Betätigung des Betätigungsmittels erzeugte Bewegung des Riegels kann ein Verschwenken, Verdrehen, Verschieben des Riegels oder eine Kombination davon umfassen. Beispielsweise kann ein Verschwenken oder Verdrehen des Riegels um eine Achse oder mehrere Achsen vorgesehen sein und zusätzlich ein Verschwenken oder Verdrehen des Betätigungsmittels oder eines Teils davon um eine andere Achse.

Der Riegel kann zudem über eine Freihubfunktion verfügen, welche es ermöglicht, den Riegel in die Entriegelungsposition zu drücken, beispielsweise beim Einsetzen des Gegenstücks in das Schloss, ohne dass das Betätigungsmittel mitbetätigt wird.

Alternativ oder zusätzlich kann das Betätigungsmittel eine Handhabe, z.B. einen Hebel, Drehknopf oder Drehgriff, und ein Drehmomentübertragungselement zur Übertragung eines Drehmoments von der Handhabe auf den Riegel umfassen, insbesondere mittels eines zwischen das Drehmomentübertragungselement und den Riegel geschalteten Exzenters. Das Drehmomentübertragungselement kann beispielsweise zumindest im Wesentlichen zylinderförmig und mittels der Handhabe drehbar ausgebildet sein. Das durch Drehung des Drehmomentübertragungselements erzeugte Drehmoment kann mittels eines Exzenters in eine Linearbewegung des Riegels zwischen Verriegelungsposition und Entriegelungsposition unwandelbar sein. Vorteilhafterweise ist die Handhabe derart ausgestaltet, dass ein Nutzer leicht die erforderliche Kraft zur Bewegung des Riegels aufbringen kann. Beispielsweise kann die Handhabe einen Drehgriff umfassen. Beispielsweise kann auch eine rotatorische Hebelbewegung in eine Linearbewegung des Riegels übersetzt werden.

Zum Sperren des Riegels in der Verriegelungsposition kann das Sperrelement mit dem Verriegelungsmechanismus, insbesondere mit dem Betätigungsmittel, einem Getriebeelement, einem Drehmomentübertragungselement und/oder mit dem Riegel selbst, in Eingriff bringbar sein. Zu diesem Zweck kann ein Element des Verriegelungsmechanismus eine Aussparung aufweisen, in die das Sperrelement in der Sperrstellung eingreift. Beispielsweise kann eine Bohrung in dem Drehmomentübertragungselement vorgesehen sein, welche das Sperrelement in der Sperrstellung aufnehmen kann, sodass eine Betätigung, insbesondere eine Verdrehung, des Drehmomentübertragungselements durch das Sperrelement verhindert wird. Entsprechend kann auch eine translatorische Betätigung des Verriegelungsmechanismus durch das, insbesondere zumindest teilweise in der Aussparung aufgenommene, Sperrelement verhindert werden.

Ein Verstellen des Sperrelements zwischen der Sperrstellung und der Freigabestellung kann eine Linearbewegung des Sperrelements, insbesondere entlang einer Längsachse des Sperrelements, umfassen. Ist das Sperrelement beispielsweise stift-, riegel-, oder bolzenartig ausgebildet, kann es zumindest abschnittsweise ein Gewinde aufweisen, als Zahnstange ausgebildet sein oder eine Exzentereinrichtung aufweisen, sodass eine Drehbewegung eines Aktors, beispielsweise eines mit dem Sperrelement gekoppelten Elektromotors, in eine Linearbewegung des Sperrelements, insbesondere entlang seiner Längsachse, unwandelbar ist.

Ist das Sperrelement kugel- oder walzenförmig ausgebildet, so kann eine, insbesondere lineare, Translationsbewegung des Sperrelements vorgesehen sein, um dieses zwischen der Sperrstellung und der Freigabestellung zu verstellen. Bei einem walzenförmigen oder zylindrischen Sperrelement kann die Translationsbewegung insbesondere parallel zu einer Grundfläche der Walze oder des Zylinders erfolgen. Die Bewegung des Sperrelements kann unmittelbar durch den Aktor erzeugt werden oder alternativ mittelbar über einen Exzenter, einen Schieber oder eine ähnliche Vorrichtung auf das Sperrelement übertragen werden.

Alternativ oder zusätzlich kann ein Verstellen des Sperrelements zwischen der Sperrstellung und der Freigabestellung eine Rotations- und/oder Translationsbewegung des Sperrelements umfassen. Beispielsweise kann das Verstellen des Sperrelements ein Verschwenken, Verdrehen, Verschieben des Sperrelements oder eine Kombination davon umfassen.

Gemäß einer Ausführungsform ist der Riegel des Verriegelungsmechanismus dazu vorgesehen, in seiner Verriegelungsposition in eine Aussparung des Energiespeichers einzugreifen. Beispielsweise kann eine Begrenzungsfläche des Energiespeichers eine entsprechende Öffnung zum Durchlass des Riegels aufweisen, sodass der Energiespeicher durch den in der Verriegelungsposition befindlichen Riegel in der Sicherungsvorrichtung gesichert ist. Alternativ oder zusätzlich kann der Riegel in seiner Verriegelungsposition beispielsweise einen Vorsprung des Energiespeichers derart hintergreifen, dass die Entnahme des Energiespeichers blockiert ist.

Ähnlich kann der Riegel in seiner Verriegelungsposition in eine Aussparung des Gegenstücks eingreifen oder dieses hintergreifen, um ein Entfernen des Gegenstücks aus dem Verriegelungsmechanismus zu verhindern, d.h. um das Öffnen des Schlosses zu verhindern. Umgekehrt kann der Riegel selbst eine Aussparung aufweisen, in die in der Verriegelungsposition eine entsprechende Struktur des Gegenstücks oder des Energiespeichers eingreifen kann.

Der Riegel ist entgegen einer Rückstellkraft einer Feder von der Verriegelungsposition in die Entriegelungsposition bringbar, sodass eine versehentliche Freigabe des Gegenstücks, z.B. ein versehentliches Lösen des Energiespeichers, verhindert wird. Weiterhin ist der Riegel durch die Feder vorgespannt, die ihn in die Verriegelungsposition drängt. Vorteilhafterweise ist die durch die Feder erzeugte Rückstellkraft so groß, dass auch angesichts im Fahrbetrieb auftretender Erschütterungen und des Gewichts des Energiespeichers ein versehentliches Bewegen des Riegels in die Entriegelungsposition wirksam verhindert wird. Weiterhin kann dadurch ein automatisches Einrasten des Energiespeichers beim Einsetzen in die Vorrichtung möglich sein. Auch in Zusammenhang mit einem Rahmen-, Bremsscheiben-, oder Kofferschloss ist der Riegel entgegen der Rückstellkraft einer Feder von der Verriegelungsposition in die Entriegelungsposition bringbar, sodass ein versehentliches Öffnen verhindert und ein automatisches Verriegeln beim Schließen ermöglicht wird. Eine derartige Rückstellfeder kann alternativ oder zusätzlich an dem Betätigungsmittel angeordnet sein.

Gemäß einer weiteren Ausführungsform weist das Schloss einen Notauslösemechanismus zur Entriegelung des Verriegelungsmechanismus bei in Sperrstellung befindlichem Sperrelement auf. Der Notauslösemechanismus kann ein Entfernen des Gegenstücks aus dem Verriegelungsmechanismus, d.h. ein Öffnen des Schlosses, auch bei in Sperrstellung befindlichem Sperrelement ermöglichen. Ein Bewegen des Riegels und eine Entnahme des Energiespeichers kann hierdurch auch dann erfolgen, wenn beispielsweise eine Fehlfunktion der Sperreinrichtung vorliegt oder der Nutzer nicht das erforderliche Freigabesignal an die Sperreinrichtung senden kann, beispielsweise weil er ein benötigtes mobiles Endgerät momentan nicht mitführt oder dessen Akku leer ist.

Der Notauslösemechanismus kann einen Schließzylinder für eine Entriegelung des Verriegelungsmechanismus mittels eines Schlüssels umfassen. Der Schließzylinder kann beispielsweise koaxial mit einem Drehmomentübertragungselement des Verriegelungsmechanismus angeordnet sein und insbesondere auf dieselbe Einrichtung zur Bewegung des Riegels wirken, insbesondere auf denselben Exzenter, wie das Drehmomentübertragungselement. Der Schließzylinder kann auf einer dem Drehmomentübertragungselement gegenüberliegenden Seite des Riegels angeordnet sein.

Der Notauslösemechanismus kann weiterhin eine Kupplungseinrichtung umfassen, die zwischen die Sperreinrichtung und den Riegel geschaltet und dazu ausgebildet ist, bei Betätigung des Notauslösemechanismus trotz in Sperrstellung befindlichem Sperrelement eine Bewegung des Riegels zu gestatten. Insbesondere trennt die Kupplungseinrichtung bei Betätigung des Notauslösemechanismus die Sperreinrichtung von dem Riegel. Dabei kann die Kupplungseinrichtung grundsätzlich an beliebiger Stelle in dem Wirkstrang zwischen Riegel und Sperreinrichtung angeordnet sein. Alternativ oder zusätzlich kann die Kupplungseinrichtung Notauslösemechanismus mit dem Riegel verbinden, sofern diese grundsätzlich voneinander getrennt sind.

Es können dafür zwei Kupplungselemente vorgesehen sein, wobei das erste Kupplungselement zwischen den Riegel und die Sperreinrichtung und das zweite Kupplungselement zwischen den Riegel und den Notauslösemechanismus geschaltet sein kann. Bei regulärer Betätigung der Vorrichtung mittels eines Betätigungsmittels des Verriegelungsmechanismus kann das erste Kupplungselement den Riegel mit dem Betätigungsmittel und der Sperreinrichtung verbinden. Zugleich kann die zweite Kupplungseinrichtung den Notauslösemechanismus, insbesondere einen Schließzylinder des Notauslösemechanismus, von dem Riegel trennen, wenn eine reguläre Betätigung des Verriegelungsmechanismus erfolgt.

Ein weiterer Aspekt der Erfindung betrifft ein Schließsystem mit zumindest einem Schloss wie vorstehend beschrieben, einer Energieversorgung, und einer Zentraleinheit.

Das zumindest eine Schloss, die Energieversorgung und die Zentraleinheit, können jeweils räumlich getrennt voneinander angeordnet sein. Insbesondere kann auch die Empfangseinheit der Sperreinrichtung von dem Schloss räumlich getrennt angeordnet sein. Mehrere Bestandteile des Schließsystems können auch miteinander gruppiert angeordnet sein. Beispielsweise können eine Energieversorgung, ein Aktor der Sperreinrichtung und ein zugehöriges Schloss in einem gemeinsamen Gehäuse, insbesondere einem Gehäuse des Schlosses, angeordnet sein.

Das Schließsystem kann mehrere Schlösser umfassen, beispielsweise eine Vorrichtung zum Sichern eines Energiespeichers und ein oder mehrere weitere Schlösser wie beispielsweise ein Rahmenschloss und ein Kofferschloss. Diese können jeweils an geeigneter Stelle an einem Elektrofahrzeug angebracht sein, insbesondere jeweils in einem eigenen Gehäuse. Zumindest ein Schloss weist, wie vorstehend beschrieben, ein Sperrelement auf. Die anderen Schlösser können elektrisch betätigbare Schlösser ohne Sperrelement sein. Alternativ können mehrere oder alle Schlösser ein Sperrelement aufweisen.

Die Energieversorgung kann das zumindest eine Schloss und/oder die Zentraleinheit mit Energie versorgen. Insbesondere die Zentraleinheit kann eine eigene Batterie aufweisen. Ein in der Vorrichtung zum Sichern eines Energiespeichers sicherbarer Energiespeicher kann zugleich als Energieversorgung für das Schließsystem dienen, insbesondere also auch das zumindest eine Schloss und/oder die Zentraleinheit mit Energie versorgen. Alternativ oder zusätzlich kann das Schließsystem zumindest eine eigene Batterie aufweisen. Diese kann einem bestimmten oder auch mehreren Schlössern zugeordnet sein. Gegebenenfalls kann die Batterie mit einem ihr zugeordneten Schloss in einem gemeinsamen Gehäuse angeordnet sein. Die Batterie kann räumlich getrennt von dem zumindest einen Schloss angeordnet sein.

Jedes Schloss weist eine Empfangseinrichtung auf. Sind mehrere Schlösser Teil des Schließsystems, so können ihre Empfangseinheiten zentral angeordnet sein und insbesondere in einem gemeinsamen Steuergerät untergebracht sein. In einem einfachen Fall kann die Empfangseinrichtung einen Schalter bilden, der einen Aktor, insbesondere den Aktor einer Sperreinrichtung, des zumindest einen Schlosses kontrolliert. Insbesondere kann die Empfangseinheit den Aktor in Abhängigkeit vom Vorliegen eines entsprechenden Freigabesignals an- oder ausschalten, wobei die Verbindung zwischen dem Aktor und der Empfangseinheit unverschlüsselt über eine Steuerleitung erfolgen kann.

Die Empfangseinheit kann dazu ausgebildet sein, Steuerbefehle wie beispielsweise ein Freigabesignal von der Zentraleinheit zu empfangen. Ferner kann die Empfangseinheit dazu ausgebildet sein, den Zustand des Schlosses und/oder eines zu sichernden Gegenstücks des Schlosses zu überwachen. Die Empfangseinheit kann mit einem ihr zugeordneten Schloss und dem zugehörigen Aktor in einem gemeinsamen Gehäuse angeordnet sein. So kann beispielsweise eine Manipulation der Steuerleitung mechanisch verhindert werden.

Die Zentraleinheit des Schließsystems kann dazu ausgebildet sein, ein Schließgeheimnis des Schließsystems nach außen hin zu repräsentieren. Mit einer Zentraleinheit können mehrere Schlösser angesteuert werden. Insbesondere kann die Zentraleinheit dazu ausgebildet sein, einen Schließbefehl bzw. Öffnungsbefehl eines Nutzers zu empfangen, beispielsweise über einer Funk- oder eine andere Drahtlosverbindung wie beispielsweise Bluetooth, WLAN, RFID, über einen mechanischen Schlüssel und/oder über ein Display bzw. ein Eingabefeld, beispielsweise über eine PIN-Eingabe.

Die Zentraleinheit kann über ein Authentifizierungsmodul verfügen. Mittels des Authentifizierungsmoduls kann ein berechtigter Nutzer authentifiziert werden und nur bei einem positiven Resultat der Authentifizierung kann ein Freigabesignal an die zumindest eine Empfangseinheit weitergeleitet werden. Beispielsweise kann das Authentifizierungsmodul zur drahtlosen Authentifizierung eines Nutzers ausgebildet sein, insbesondere mittels eines Austauschs elektronischer Schlüssel via Bluetooth, WLAN, RFID oder anderer bekannter Verfahren. Denkbar ist auch eine drahtgebundene Authentifizierung an der Zentraleinheit oder dem Elektrofahrzeug selbst, beispielsweise mittels eines Fingerabdrucksensors oder mittels eines anderen, insbesondere biometrischen, Verfahrens.

Es kann für mehrere Schlösser jeweils dasselbe Schließgeheimnis vorgesehen sein. Liegt ein gültiger Schließ- bzw. Öffnungsbefehl vor, so kann die Zentraleinheit einen entsprechenden Steuerbefehl an die zumindest eine Empfangseinheit übermitteln. Die Zentraleinheit kann bei jedem Schließ- bzw. Öffnungsvorgang und insbesondere für jedes Schloss des Schließsystems das Schließgeheimnis neu anfordern. Alternativ kann die Zentraleinheit selbst einmal entsperrt werden und diesen Zustand bis auf Widerruf speichern. In diesem Fall kann die Betätigung aller Schlösser durch die Zentraleinheit freigegeben werden. Die Zentraleinheit kann hierzu automatisch oder auf Anforderung eines Nutzers und ohne erneute Abfrage des Schließgeheimnisses Freigabesignale an alle Schlösser senden. Nach ihrer Verwendung kann die Zentraleinheit wieder gesperrt werden. Die Sperrung kann beispielsweise nach Ablauf einer bestimmten Zeitspanne der Nichtbenutzung erfolgen oder durch eine Nutzereingabe an der Zentraleinheit, beispielsweise über ein Display.

Beispielsweise kann eine Gruppe von Schlössern des Schließsystems ein gemeinsames Schließgeheimnis aufweisen, während eine andere Gruppe von Schlössern desselben Schließsystems ein anderes gemeinsames Schließgeheimnis aufweist. Somit kann jede Gruppe durch Eingabe des zugehörigen Schließgeheimnisses separat betätigt werden.

Die Zentraleinheit kann durch einen Bordcomputer eines Elektrofahrzeugs gebildet sein. Auch ein mobiles Endgerät eines Nutzers, beispielsweise ein Smartphone, kann als Zentraleinheit dienen. Optional kann die Zentraleinheit den Zustand des Elektrofahrzeugs überwachen, beispielsweise Stillstand oder Bewegung des Elektrofahrzeugs, Öffnungs- oder Schließzustand eines Schlosses. Dies kann insbesondere durch geeignete, innerhalb oder außerhalb der Zentraleinrichtung angeordnete, Sensoren erfolgen oder durch Abfrage des Zustands anderer Systeme, beispielsweise des Antriebsmotors. Es kann vorgesehen sein, dass die Zentraleinheit eine Rückmeldung über den ermittelten Zustand, insbesondere Warnungen oder Fehlermeldungen, an den Nutzer übermittelt.

Die Verbindung zwischen der Zentraleinheit und der zumindest einen Empfangseinheit kann entweder drahtgebunden über eine Signalleitung oder drahtlos erfolgen, beispielsweise über Funk, WLAN, Bluetooth. Das Signal kann bei Bedarf verschlüsselt übertragen werden. Der Zugriff auf eine Signalleitung kann mechanisch verhindert werden, indem diese unzugänglich in dem Elektrofahrzeug verlegt wird, beispielsweise in einem Rahmen eines Elektrofahrrads. Die Kommunikation kann in zwei Richtungen erfolgen. Beispielsweise kann die Zentraleinheit Steuerbefehle an die Empfangseinheit übermitteln und die Empfangseinheit kann Informationen über das Schloss bzw. die Vorrichtung zum Sichern eines Energiespeichers an die Zentraleinheit übermitteln.

Nachfolgend wird die Erfindung rein beispielhaft anhand einer möglichen Ausführungsform unter Bezugnahme auf die beigefügte Zeichnung beschrieben. Es zeigen:
- Fig. 1: eine Draufsicht auf ein Schloss gemäß einer ersten Ausführungsform;
- Fig. 2: eine Draufsicht auf das Schloss von Fig. 1 mit einem eingesetzten Energiespeicher;
- Fig. 3: eine Schnittansicht eines Verriegelungsmechanismus des Schlosses von Fig. 1 im Bereich eines Riegels;
- Fig. 4: eine Draufsicht auf ein Schloss gemäß einer zweiten Ausführungsform;
- Fig. 5: eine Schnittansicht eines Schlosses gemäß einer dritten Ausführungsform im Bereich eines Sperrelements;
- Fig. 6: eine Draufsicht auf ein Schloss gemäß einer vierten Ausführungsform;
- Fig. 7A: eine perspektivische Ansicht eines Schlosses in einer Verriegelungsposition gemäß einer fünften Ausführungsform;
- Fig. 7B: eine weitere perspektivische Ansicht des Schlosses gemäß Fig. 7A in der Verriegelungsposition;
- Fig. 7C: eine perspektivische Ansicht des Schlosses gemäß Fig. 7A in einer Entriegelungsposition;
- Fig. 7D: eine weitere perspektivische Ansicht des Schlosses gemäß Fig. 7A in der Entriegelungsposition;
- Fig. 8: eine Ausführungsform eines Schließsystems;
- Fig. 9: eine weitere Ausführungsform eines Schließsystems.

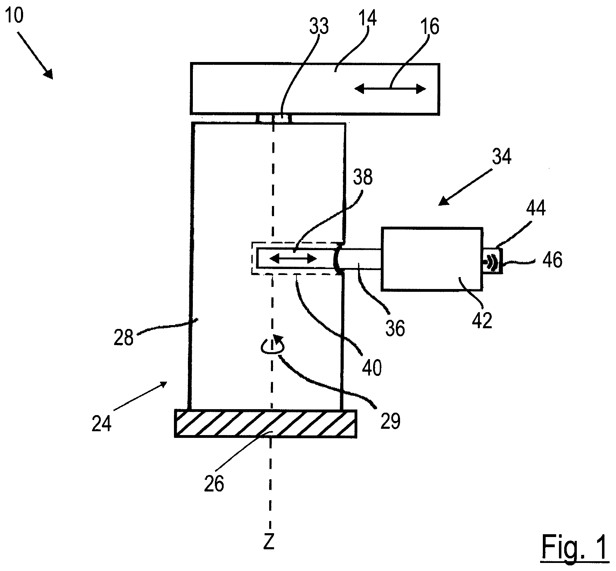

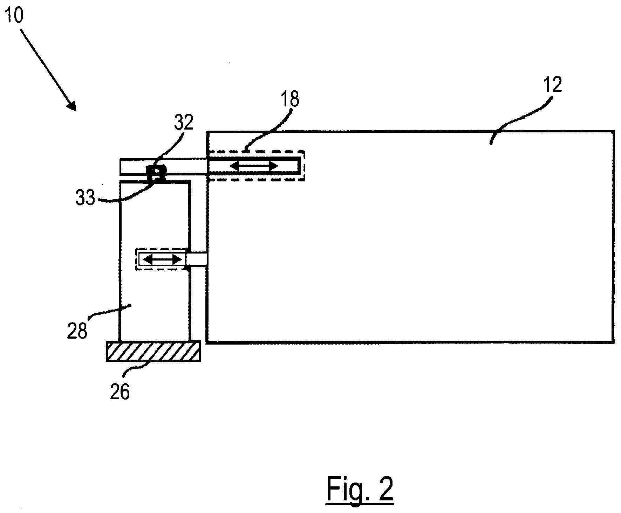

In Fig. 1 ist eine erste Ausführungsform eines Schlosses, nämlich eine Vorrichtung 10 zum Sichern eines Energiespeichers 12 (siehe Fig. 2) dargestellt, insbesondere für ein Elektrofahrrad (nicht gezeigt). Mit der gezeigten Vorrichtung 10 soll ein Energiespeicher 12 grundsätzlich verlier- und diebstahlsicher an dem Elektrofahrrad befestigbar sein, wobei der Energiespeicher 12 durch einen berechtigten Nutzer aus der Vorrichtung 10 entnehmbar sein soll, beispielsweise zur Durchführung eines Ladevorgangs.

Die Vorrichtung 10 weist einen Verriegelungsmechanismus mit einem Riegel 14 auf, der zwischen einer Verriegelungsposition und einer Entriegelungsposition bewegbar ist, wie mit einem Pfeil 16 angedeutet ist. In der in Fig. 1 dargestellten Verriegelungsposition ist der Riegel 14 ausgefahren, sodass er mit dem Energiespeicher 12 diesen sichernd zusammenwirken kann. Wie in Fig. 2 zu erkennen ist, greift der Riegel 14 in der Verriegelungsposition in eine entsprechende Aussparung 18 (gestrichelt dargestellt) des Energiespeichers 12 ein und blockiert somit eine Entnahme des Energiespeichers 12 aus der Vorrichtung 10.

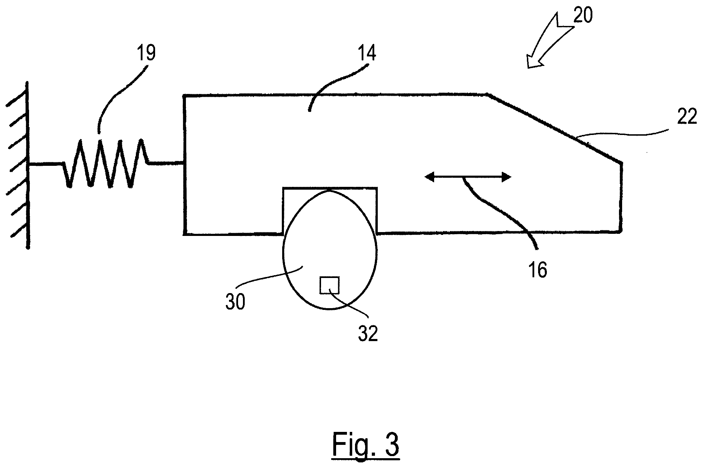

Der Riegel 14 ist durch eine Feder 19 vorgespannt, die ihn in die Verriegelungsposition drängt (siehe Fig. 3). Eine Bewegung des Riegels 14 in die Entriegelungsposition erfolgt somit gegen die Rückstellkraft der Feder 19. So kann der Energiespeicher 12 beispielsweise in die Vorrichtung 10 eingerastet werden, indem der Riegel 14 durch den in Richtung des Pfeils 20 (siehe Fig. 3) eingesetzten Energiespeicher 12 mittels einer abgeschrägten Steuerfläche 22 gegen die Rückstellkraft der Feder 19 so weit zurückgedrängt wird, bis der Riegel 14 in die Aussparung 18 des Energiespeichers 12 eingreifen kann, woraufhin der Riegel 14 wiederum durch die Feder 19 zurück in die Verriegelungsposition gebracht wird, wie sie in Fig. 2 gezeigt ist.

Zur Entnahme des Energiespeichers 12 aus der Vorrichtung 10 ist der Riegel 14 in die Entriegelungsposition bewegbar. Zu diesem Zweck weist der Verriegelungsmechanismus Betätigungsmittel 24 für eine manuelle Bewegung des Riegels 14 in die Entriegelungsposition auf (Fig. 1). Die Betätigungsmittel 24 umfassen eine Handhabe 26 und ein Drehmomentübertragungselement 28 zur Übertragung eines Drehmoments von der Handhabe 26 auf den Riegel 14. Die Handhabe 26 ist im gezeigten Ausführungsbeispiel als Drehgriff ausgebildet, der mit dem Drehmomentübertragungselement 28 drehfest verbunden ist. Das Drehmomentübertragungselement 28 ist hier als Zylinder ausgestaltet, der mittels des Drehgriffs 26 um seine Längsachse Z drehbar ist, wie in Fig. 1 durch den Pfeil 29 angedeutet ist.

Zur Übertragung eines Drehmoments von der Handhabe 26 bzw. von dem damit verbundenen Drehmomentübertragungselement 28 auf den Riegel 14 ist ein Exzenter 30 zwischen das Drehmomentübertragungselement 28 und den Riegel 14 geschaltet, wie in Fig. 3 gezeigt ist. Eine Vierkantöffnung 32 im Exzenter 30 dient zur Aufnahme einer entlang der Längsachse Z des Drehmomentübertragungselements 28 angeordneten Welle 33 (Fig. 1, 2) und stellt sicher, dass eine Drehung des Drehmomentübertragungselements 28 auf den Exzenter 30 übertragen wird, wodurch eine lineare Bewegung des Riegels 14 entlang des Pfeils 16 zwischen der Verriegelungsposition und der Entriegelungsposition bewirkbar ist. Somit ist der Verriegelungsmechanismus der Vorrichtung 10 zum Sichern eines Energiespeichers 12 manuell durch Drehen an der Handhabe 26 betätigbar, ohne dass der Einsatz eines Schlüssels erforderlich ist.

Des Weiteren umfasst die Vorrichtung 10 eine Sperreinrichtung 34 mit einem Sperrelement 36 (Fig. 1). Das Sperrelement 36 ist in Richtung des Pfeils 38 zwischen einer Sperrstellung und einer Freigabestellung verstellbar. In der Sperrstellung ist das Sperrelement 36 dazu ausgebildet, den Verriegelungsmechanismus in seinem Verriegelungszustand zu sperren, sodass eine Bewegung des Riegels 14 in die Entriegelungsposition unmöglich ist. Dafür befindet sich das Sperrelement 36 in seiner Sperrstellung in Eingriff mit dem Verriegelungsmechanismus bzw. mit zumindest einem Teil des Verriegelungsmechanismus.

In Fig. 1 ist ein stiftförmiges Sperrelement 36 gezeigt, das mit dem Drehmomentübertragungselement 28 des Verriegelungsmechanismus in Eingriff bringbar ist. Das Drehmomentübertragungselement 28 weist dafür eine Öffnung 40 auf, in die das stiftförmige Sperrelement 36 in der Sperrstellung eingreifen kann, sodass eine Drehung des Drehmomentübertragungselements 28 und somit der Handhabe 26 verhindert wird. Somit ist eine manuelle Betätigung des Verriegelungsmechanismus unmöglich und der Riegel 14 ist in der Verriegelungsposition blockiert. Alternativ oder zusätzlich kann das Sperrelement 36 mit der Handhabe 26 in Eingriff bringbar sein, um den Verriegelungsmechanismus in seinem Verriegelungszustand zu blockieren.

Wird das Sperrelement 36 in Fig. 1 entlang der Pfeilrichtung 38 aus der Öffnung 40 des Drehmomentübertragungselements 28 so weit heraus bewegt, dass es mit dem Verriegelungsmechanismus außer Eingriff gerät und dass eine Drehung des Drehmomentübertragungselements 28 wieder möglich ist, so befindet sich das Sperrelement 36 in seiner Freigabestellung. Der Riegel 14 ist nun durch die Betätigungsmittel 24 wieder in die Entriegelungsposition bewegbar.

Zur Verstellung des Sperrelements 36 umfasst die Sperreinrichtung 34 einen elektromechanischen Aktor 42, hier einen Elektromotor. Das Verstellen des Sperrelements 36 zwischen der Sperrstellung und der Freigabestellung umfasst im vorliegenden Ausführungsbeispiel eine Linearbewegung des Sperrelements 38 entlang einer durch den Pfeil 38 dargestellten Längsachse des Sperrelements 36. Die Umwandlung einer Drehbewegung des elektromechanischen Aktors 42 in eine Linearbewegung des Sperrelements 36 kann beispielsweise mittels eines Spindel- oder eines Zahnstangenantriebs erfolgen, wobei die Prinzipien derartiger Antriebe bekannt und daher hier nicht im Detail ausgeführt sind.

Die Verstellung des Sperrelements 36 in die Freigabestellung durch den Aktor 42 ist durch ein Freigabesignal bewirkbar. Zum Empfang des Freigabesignals weist die Sperreinrichtung 34 eine Empfangseinheit 44 auf. Die Empfangseinheit 44 ist gemäß der gezeigten Ausführungsform für einen drahtlosen Signalempfang ausgebildet. Zu diesem Zweck kann sie wahlweise ein oder mehrere Module für ein drahtloses Empfangen und/oder Senden von Daten aufweisen, beispielsweise ein Bluetooth-Modul, RFID-Modul oder WLAN-Modul. Die Sperreinrichtung 34 weist zudem ein Authentifizierungsmodul 46 zur Authentifizierung eines empfangenen Freigabesignals auf. Im vorliegenden Ausführungsbeispiel ist das Authentifizierungsmodul 46 in die Empfangseinheit 44 integriert. Die Empfangseinheit 44 ist somit dazu eingerichtet, elektronische Schlüssel mit einem mobilen Endgerät eines Nutzers auszutauschen, beispielsweise mittels WLAN, Bluetooth und/oder RFID.

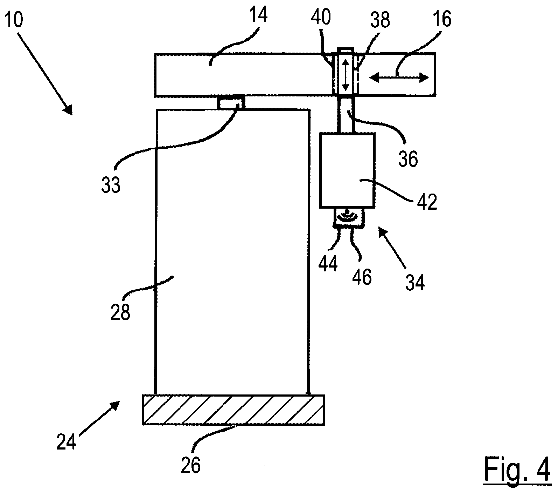

Die Funktionsweise der in Fig. 1-3 gezeigten Vorrichtung 10 kann auch in ein Schloss 100 wie beispielsweise ein Rahmenschloss oder ein Kofferschloss integriert werden. Dies gilt gleichermaßen für die in Fig. 4-6 gezeigten Ausführungsformen.

Fig. 4 zeigt eine zweite Ausführungsform einer Vorrichtung 10, die in weiten Teilen der ersten Ausführungsform aus Fig. 1 gleicht. Auch die Vorrichtung 10 gemäß der zweiten Ausführungsform weist eine Sperreinrichtung 34 mit einem Sperrelement 36 auf, das in Richtung des Pfeils 38 zwischen einer Sperrstellung, wie sie in Fig. 4 gezeigt ist, und einer Freigabestellung verstellbar ist. Im Gegensatz zur ersten Ausführungsform wird das Sperrelement 36 zum Sperren des Verriegelungsmechanismus, d.h. zum Verhindern einer Bewegung des Riegels 14 in die Entriegelungsposition, jedoch nicht mit den Betätigungsmitteln 24 des Verriegelungsmechanismus sondern mit dem Riegel 14 selbst in Eingriff gebracht.

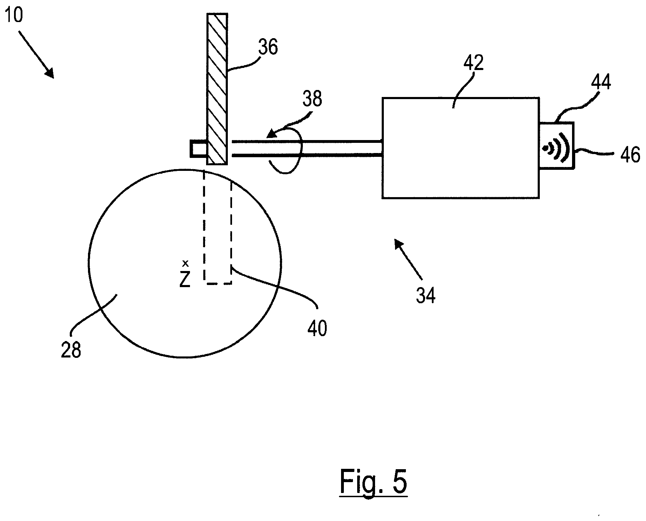

Fig. 5 zeigt eine Schnittansicht entlang einer Ebene senkrecht zur Längsachse Z des Drehmomentübertragungselements 28 einer dritten Ausführungsform einer Vorrichtung 10, die ebenfalls weitgehend mit der ersten Ausführungsform von Fig. 1 übereinstimmt. Jedoch ist in der vorliegenden Ausführungsform das Sperrelement 36 zum Blockieren des Verriegelungsmechanismus mittels eines Elektromotors 42 drehbar angeordnet. Fig. 5 zeigt das Sperrelement 36 in seiner Freigabestellung, in der ein Verdrehen des Drehmomentübertragungselements 28 und somit ein Bewegen des Riegels 14 in die Entriegelungsposition möglich ist. Das hier im Querschnitt gezeigte Sperrelement 36 kann stift- oder scheibenförmig ausgebildet sein und im letzteren Fall beispielsweise die Form eines Viertel- oder Halbkreises aufweisen. Ein Verstellen des Sperrelements 36 zwischen der gezeigten Freigabestellung und der Sperrstellung umfasst eine Rotationsbewegung des Sperrelements 36 entlang der Pfeilrichtung 38. Das Sperrelement 36 wird durch die Rotation in eine damit korrespondierende spaltförmige Öffnung 40 des Drehmomentübertragungselements 28 verdreht. In dieser Situation wird eine Verdrehung des Drehmomentübertragungselements 28 um seine Längsachse Z durch das Sperrelement 36 verhindert und der Verriegelungsmechanismus in der Verriegelungsposition blockiert.

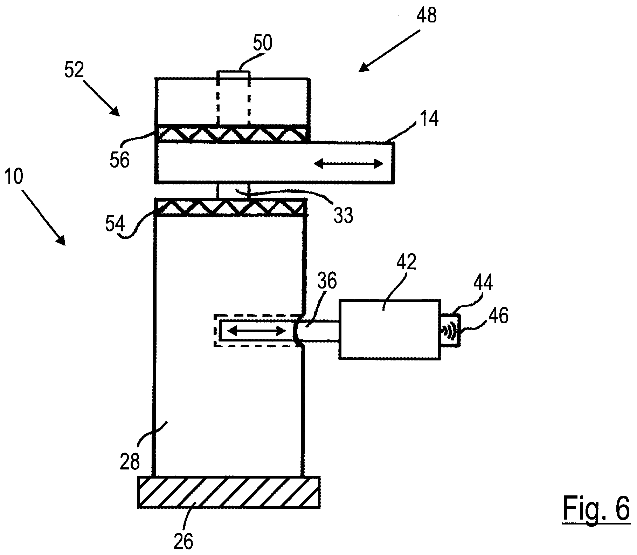

Fig. 6 zeigt eine Vorrichtung 10 gemäß einer vierten Ausführungsform. Die Vorrichtung 10 entspricht in weiten Teilen der ersten Ausführungsform von Fig. 1. Zusätzlich weist die Vorrichtung 10 von Fig. 6 einen Notauslösemechanismus 48 auf, der eine Entriegelung des Verriegelungsmechanismus auch dann erlaubt, wenn sich das Sperrelement 36 in der Sperrstellung befindet. So kann ein Energiespeicher 12 selbst dann aus der Vorrichtung 10 entnommen werden, wenn die reguläre Verstellung des Sperrelements 36 in die Freigabestellung nicht funktionieren sollte, beispielsweise wenn eine Fehlfunktion der Sperreinrichtung 34 vorliegt oder wenn die Authentifizierung eines berechtigten Nutzers nicht möglich ist, zum Beispiel weil der Nutzer sein mobiles Endgerät zum Senden eines Freigabesignals nicht zur Hand hat oder der Akku des mobilen Endgeräts leer ist.

Der Notauslösemechanismus 48 verfügt über einen Schließzylinder 50, der mittels eines zugehörigen Schlüssels eine mechanische und manuelle Entriegelung des Verriegelungsmechanismus erlaubt und dadurch auch unabhängig von einer Stromversorgung des Aktors 42 funktioniert. Um ein Bewegen des Riegels 14 durch den Notauslösemechanismus 48 zu ermöglichen, obwohl das Sperrelement 36 sich in der Sperrstellung befindet, muss der Riegel 14 von der Sperreinrichtung 34 abgekuppelt werden. Dafür weist der hier gezeigte Notauslösemechanismus 48 eine Kupplungseinrichtung 52 auf.

Gemäß der gezeigten Ausführungsform umfasst die Kupplungseinrichtung 52 zwei Kupplungselemente 54, 56. Das erste Kupplungselement 54 ist zwischen den Riegel 14 und das Drehmomentübertragungselement 28 und somit in den Wirkstrang zwischen dem Riegel 14 und der Sperreinrichtung 34 geschaltet. Es verbindet während des regulären Gebrauchs der Vorrichtung 10 mittels der Betätigungsmittel 24 den Riegel 14 mit dem Drehmomentübertragungselement 28 und erlaubt so die Übertragung eines Drehmoments von der Handhabe 26 auf den Riegel 14. Das erste Kupplungselement 54 ist zudem dazu ausgebildet, bei Betätigung des Notauslösemechanismus 48 den Riegel 14 von dem Drehmomentübertragungselement 28 zu trennen. Da in der gezeigten Ausführungsform das Drehmomentübertragungselement 28 durch das Sperrelement 36 blockiert wird, ermöglicht die Trennung des Riegels 14 von dem Drehmomentübertragungselement 28 eine Bewegung des Riegels 14, obwohl sich das Sperrelement 36 in der Sperrstellung befindet. So kann eine Entriegelung des Verriegelungsmechanismus und eine Entnahme des Energiespeichers 12 aus der Vorrichtung 10 zerstörungsfrei erfolgen, auch wenn das Sperrelement 36 den Verriegelungsmechanismus in der Verriegelungsposition blockiert.

Ein zweites Kupplungselement 56 ist zwischen den Schließzylinder 50 und den Riegel 14 geschaltet. Es ist dazu ausgebildet, den Riegel 14 bei Betätigung des Notauslösemechanismus 48 mit dem Schließzylinder 50 zu verbinden, sodass mittels eines Schlüssels der Riegel 14 in die Entriegelungsposition bewegt werden kann. Bei regulärer Betätigung der Vorrichtung 10 ist der Schließzylinder 50 durch das zweite Kupplungselement 56 von dem Riegel 14 getrennt, sodass eine Bewegung des Riegels 14 unabhängig von einer Betätigung des Schließzylinders 50 erfolgen kann.

Die Kupplungseinrichtung 52 kann insbesondere so ausgestaltet sein, dass grundsätzlich das zweite Kupplungselement 56 geöffnet ist und das erste Kupplungselement 54 eingekuppelt ist. Wird ein passender Schlüssel (nicht gezeigt) in den Schließzylinder 50 des Notauslösemechanismus 48 eingeführt, so wird das erste Kupplungselement 54 geöffnet und das zweite Kupplungselement 56 eingekuppelt, sodass ein Entriegeln des Riegels 14 mittels des Notauslösemechanismus 48 erfolgen kann.

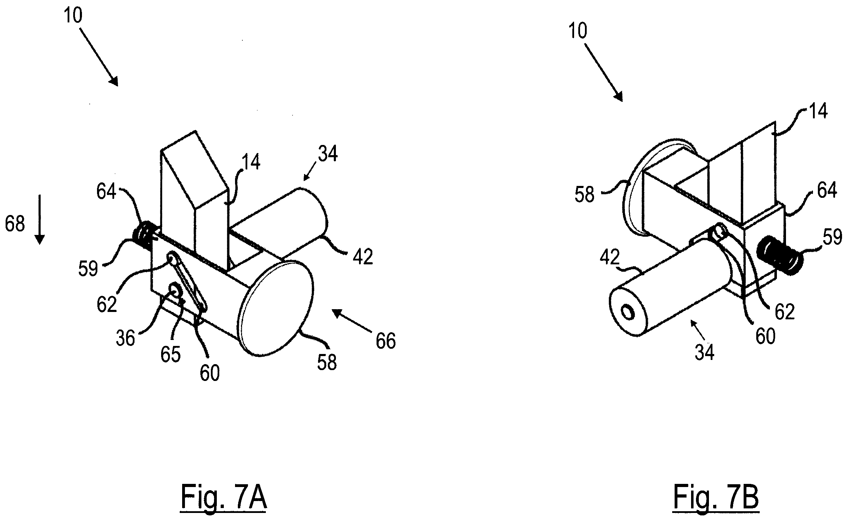

Fig. 7A-D stellen eine fünfte Ausführungsform einer Vorrichtung 10 zum Sichern eines Energiespeichers dar, wobei die Funktionsweise des Verriegelungsmechanismus und der Sperreinrichtung 34 dieser Vorrichtung 10 gleichermaßen in einem Schloss 100 zum Einsatz kommen kann.

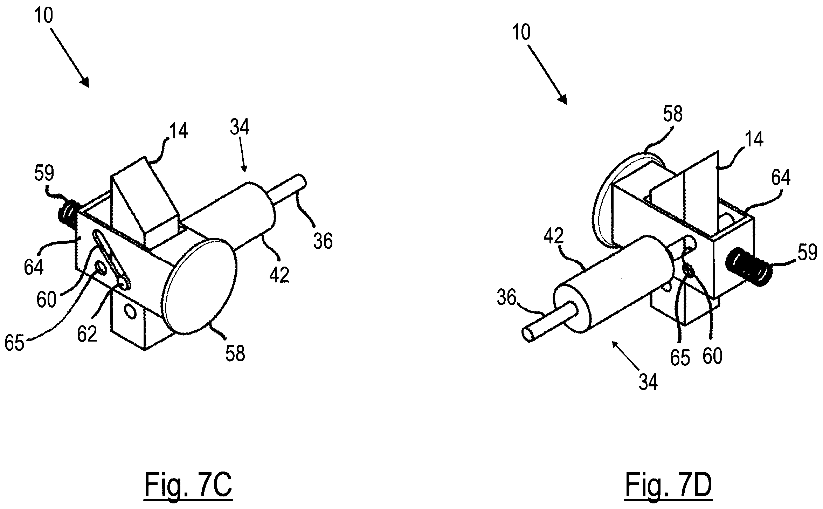

Auch die Vorrichtung 10 gemäß der fünften Ausführungsform umfasst eine Sperreinrichtung 34 mit einem stiftartigen Sperrelement 36, das zwischen einer in Fig. 7A, 7B gezeigten Sperrstellung und einer in Fig. 7C, 7D gezeigten Freigabestellung linear entlang seiner Längsachse verstellbar ist. Zur Verstellung des Sperrelements 36 ist wiederum ein elektromechanischer Aktor 42 vorgesehen.

Ferner umfasst die Vorrichtung 10 einen Verriegelungsmechanismus mit einem Riegel 14. Eine Bewegung des Riegels 14 von seiner Verriegelungsposition gemäß Fig. 7A, 7B in seine Entriegelungsposition gemäß Fig. 7C, 7D erfolgt in der fünften Ausführungsform mittels einen Druckknopf 58 umfassender Betätigungsmittel. Im Gegensatz zur ersten Ausführungsform wird die Ver- bzw. Entriegelung des Riegels 14 also nicht durch eine Drehbewegung sondern durch eine Translationsbewegung der Betätigungsmittel erzeugt. Zur Umsetzung eines Drucks auf den Druckknopf 58 in eine Bewegung des Riegels 14, ist der Riegel 14 mittels Zapfen 62 in einer schräg zur Eindrückrichtung des Druckknopfes 58 angeordneten Kulisse 60 geführt, welche in einem Rahmen 64 ausgebildet ist, der den Riegel 14 umgibt und mit dem Druckknopf 58 verbunden ist. Wie in Fig. 7A angedeutet ist, wird durch die Kulisse 60 eine lineare Eindrückbewegung des Druckknopfes 58 entlang des Pfeils 66 in eine senkrecht dazu orientierte Linearbewegung des Riegels 14 entlang des Pfeils 68 in seine Entriegelungsposition umgewandelt. Der Druckknopf 58 ist mittels einer Feder 59 in seine nicht eingedrückte Position vorgespannt, welche der Verriegelungsposition des Riegels 14 entspricht.

Um eine unbeabsichtigte Bewegung des Riegels 14 in die Entriegelungsposition zu verhindern, wird das Sperrelement 36 gemäß der fünften Ausführungsform in der Verriegelungsposition sowohl mit dem Riegel 14 als auch mit dem Druckknopf 58, konkret einer Aussparung 65 in dem mit dem mit dem Druckknopf 58 verbundenen Rahmen 64, in Eingriff gebracht. Ein Eindrücken des Druckknopfes 58 und ein Bewegen des Riegels 14 in die Entriegelungsposition werden somit wirksam verhindert.

Wird das Sperrelement 36 durch den Aktor 42 in seine Freigabestellung gebracht (Fig. 7C, 7D), so befindet es sich nicht mehr in Eingriff mit dem Riegel 14 und dem Rahmen 64, sodass ein Eindrücken des Druckknopfes 58 und eine Entriegelung des Riegels 14 möglich sind.

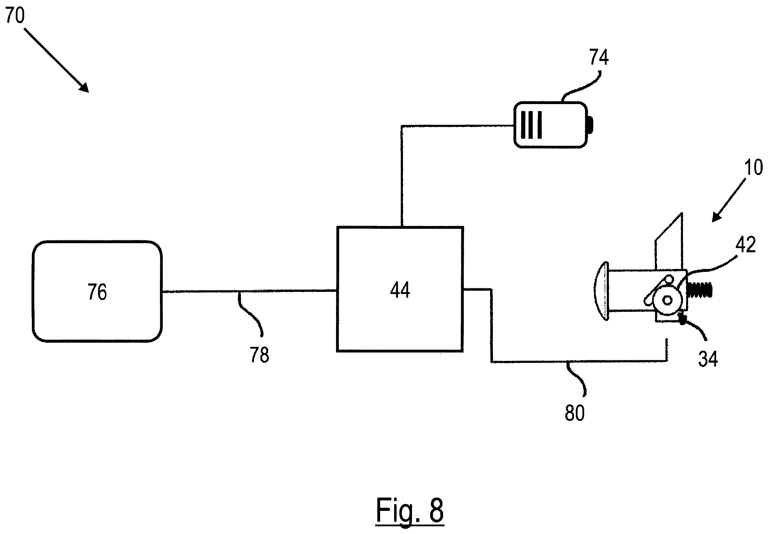

Fig. 8 zeigt schematisch ein Schließsystem 70 mit einem Schloss 100, einer Empfangseinheit 44, einer Energieversorgung 74 und einer Zentraleinheit 76. Die Zentraleinheit 76 kann durch einen Bordcomputer eines Elektrofahrzeugs, insbesondere Elektrofahrrads, gebildet sein. Ein Nutzer des Elektrofahrzeugs kann an der Zentraleinheit 76 einen Öffnungs- oder Schließbefehl für das Schloss 100 erzeugen. Dazu muss sich der Nutzer beispielsweise an der Zentraleinheit 76 authentifizieren oder ein Schließgeheimnis an die Zentraleinheit 76 übergeben. Die Zentraleinheit 76 kann beispielsweise eine Nutzerauthentifizierung über den Austausch elektronischer Schlüssel mit einem Smartphone des Nutzers bereits dann automatisch durchführen, wenn sich der Nutzer mit dem Smartphone dem Elektrofahrzeug nähert. Bei einer erfolgreichen Authentifizierung kann die Zentraleinheit 76 aktiviert werden, insbesondere kann ein Display der Zentraleinheit 76 angeschaltet werden. Um das Schloss 100 zu öffnen oder zu schließen, kann die Eingabe eines Schließbefehls auf dem Display der Zentraleinheit 76 erfolgen. Dazu kann ein Schließgeheimnis für das Schloss 100 abgefragt werden, beispielsweise mittels einer PIN-Eingabe auf dem Display. Es kann jedoch auch auf die Abfrage des Schließgeheimnisses verzichtet werden, sodass das Schließgeheimnis gewissermaßen mit der positiven Nutzerauthentifizierung übereinstimmt, mittels der der Zugriff auf die Zentraleinheit 76 selbst freigeschaltet wurde.

Ist die Authentifizierung erfolgreich bzw. das übergebene Schließgeheimnis korrekt, leitet die Zentraleinheit 76 den Öffnungs- oder Schließbefehl, beispielsweise in Form eines Freigabesignals zur Verstellung des Sperrelements 36 in die Freigabestellung, an die Empfangseinheit 44 weiter. Hierzu ist gemäß Fig. 8 eine Signalleitung 78 vorgesehen. Alternativ kann auch eine drahtlose Übertragung des Freigabesignals an die Empfangseinheit 44 vorgesehen sein.

Über eine Steuerleitung 80 aktiviert die Empfangseinheit 44 auf das von der Zentraleinheit 76 erhaltene Freigabesignal hin den Aktor 42, um das Sperrelement 36 in die Freigabestellung zu verstellen. Die Empfangseinheit 44, das Schloss 100 und die als Bordcomputer ausgebildete Zentraleinheit 76 werden durch die gemeinsame Energieversorgung 74 mit Energie versorgt.

Anstelle des Schlosses 100 kann auch eine Vorrichtung 10 zum Sichern eines Energiespeichers 12 vorgesehen sein. In diesem Fall kann die Energieversorgung 74 durch den Energiespeicher 12 selbst gebildet sein oder durch diesen ergänzt werden.

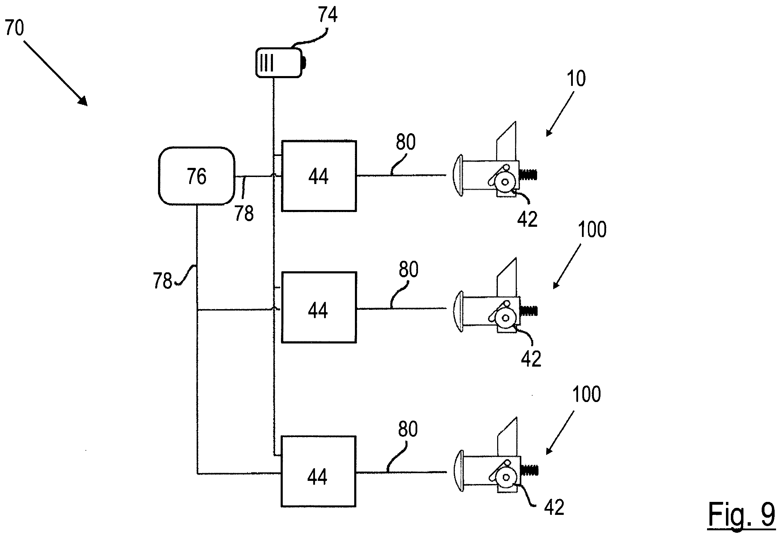

Fig. 9 zeigt ein Schließsystem 70 mit zwei Schlössern 100 und einer Vorrichtung 10 zum Sichern eines Energiespeichers, welche mittels einer gemeinsamen Zentraleinheit 76 ansteuerbar sind. Bei den Schlössern 100 handelt es sich um ein Rahmenschloss und um ein Kofferschloss. Die Vorrichtung 10 zur Sicherung eines Energiespeichers und die Schlösser 100 sind jeweils lediglich schematisch dargestellt und können grundsätzlich verschiedenartige elektrisch betätigbare Schlösser sein, insbesondere basierend auf den in Fig. 1 bis Fig. 7 gezeigten Ausführungsformen. Die Schlösser 100 und die Vorrichtung 10 weisen jeweils eine eigene Empfangseinheit 44 auf, die dazu ausgebildet ist, einen auf das jeweilige Schloss 100 bzw. die Vorrichtung 10 bezogenen Steuerbefehl, beispielsweise ein Freigabesignal, von der Zentraleinheit 76 zu empfangen und an die Aktoren 42 der Schlösser 100 bzw. der Vorrichtung 10 weiterzuleiten.

Die Schlösser 100, die Vorrichtung 10 sowie die Empfangseinheit 44 und die Zentraleinheit 76 weisen eine gemeinsame Energieversorgung 74 in Form einer Batterie auf, die räumlich getrennt von den Verbrauchern angeordnet und über Versorgungsleitungen mit den Verbrauchern verbunden ist. Alternativ kann es sich bei der Energieversorgung 74 um den durch die Vorrichtung 10 zu sichernden Energiespeicher 12 handeln.

An der Zentraleinheit 76 kann für jedes der Schlösser 100 oder die Vorrichtung 10 ein individueller Öffnungs- bzw. Schließbefehl erzeugt werden, beispielsweise durch eine Nutzereingabe auf einem Display der Zentraleinheit 76. In der vorgesehenen Ausführungsform ist ein gemeinsames Schließgeheimnis für alle Schlösser 100 und die Vorrichtung 10 vorgesehen. Durch einen Nutzer wird das Schließgeheimnis an die Zentraleinheit 76 übergeben. Die Zentraleinheit 76 ermöglicht daraufhin die Eingabe von Schließ- bzw. Öffnungsbefehlen für jedes Schloss 100 bzw. für die Vorrichtung 10 auf ihrem Display, wobei das Schließgeheimnis nicht jedes Mal erneut abgefragt wird.

Alternativ kann nach Eingabe des Schließgeheimnisses durch die Zentraleinheit 76 unmittelbar ein Freigabesignal an die Empfangseinheit 44 der Schlösser 100 bzw. der Vorrichtung 10 gesendet werden. Alternativ oder zusätzlich kann für einige oder jedes der Schlösser 100 bzw. für die Vorrichtung 10 jeweils ein eigenes Schließgeheimnis vorgesehen sein.

Nach Abschluss der Benutzung wird der Zugriff auf die Schlösser 100 und die Vorrichtung 10 gesperrt, sodass erneute Schließ- bzw. Öffnungsbefehle oder Freigabesignale erst nach erneuter Eingabe des Schließgeheimnisses erzeugt werden können. Die Sperrung des Zugriffs kann beispielsweise nach Ablauf einer bestimmten Zeitspanne der Nichtbenutzung des Elektrofahrzeugs erfolgen und/oder durch eine Nutzereingabe auf dem Display.

### Bezugszeichenliste

- 10: Vorrichtung
- 12: Energiespeicher
- 14: Riegel
- 16: Bewegung des Riegels
- 18: Aussparung des Energiespeichers
- 19: Feder
- 20: Einsetzen des Energiespeichers
- 22: Steuerfläche
- 24: Betätigungsmittel
- 26: Handhabe
- 28: Drehmomentübertragungselement
- 29: Drehung des Drehmomentübertragungselements
- 30: Exzenter
- 32: Vierkantöffnung
- 33: Welle
- 34: Sperreinrichtung
- 36: Sperrelement
- 38: Verstellung des Sperrelements
- 40: Öffnung
- 42: elektromechanischer Aktor
- 44: Empfangseinheit
- 46: Authentifizierungsmodul
- 48: Notauslösemechanismus
- 50: Schließzylinder
- 52: Kupplungseinrichtung
- 54: erstes Kupplungselement
- 56: zweites Kupplungselement
- 58: Druckknopf
- 59: Feder
- 60: Kulisse
- 62: Zapfen
- 64: Rahmen
- 65: Aussparung für Sperrelement
- 66: Eindrückrichtung des Druckknopfes 58
- 68: Bewegungsrichtung des Riegels in die Verriegelungsposition
- 70: Schließsystem
- 74: Energieversorgung
- 76: Zentraleinheit
- 78: Signalleitung
- 80: Steuerleitung
- 100: Schloss
- Z: Längsachse des Zylinders

## Patentansprüche

1. Schloss (10, 100), insbesondere für ein Elektrofahrrad, mit
einem Verriegelungsmechanismus, welcher einen Riegel (14) aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist,
**gekennzeichnet durch**
eine Sperreinrichtung (34), umfassend
ein Sperrelement (36), das zwischen einer Sperrstellung, in welcher der Riegel in seiner Verriegelungsposition gesperrt ist, und einer Freigabestellung verstellbar ist, in welcher der Riegel (14) in seine Entriegelungsposition bewegbar ist, und
eine Empfangseinheit (44) zum Empfangen eines Freigabesignals, **durch** das die Verstellung des Sperrelements (36) in die Freigabestellung bewirkbar ist,
**dadurch** gekennzeichnet, dass der Riegel (14) entgegen einer Rückstellkraft einer Feder (19) von der Verriegelungsposition in die Entriegelungsposition bringbar ist, wobei der Riegel (14) **durch** die Feder (19) vorgespannt ist, die ihn in die Verriegelungsposition drängt.

2. Schloss (10, 100) nach Anspruch 1,
**dadurch gekennzeichnet, dass**
das Gegenstück ein Energiespeicher oder Bestandteil eines Energiespeichers oder ein Kloben eines Rahmenschlosses oder Bremsscheibenschlosses oder ein Schließbügel oder eine Klinke eines Kofferschlosses, jeweils insbesondere eines Elektrofahrrads, ist.

3. Schloss (10, 100) nach Anspruch 1 oder 2,
**dadurch gekennzeichnet, dass** die Sperreinrichtung (34) einen Aktor (42), insbesondere einen elektromechanischen oder elektromagnetischen Aktor, zur Verstellung des Sperrelements (36) umfasst.

4. Schloss (10, 100) nach zumindest einem der vorstehenden Ansprüche, **dadurch gekennzeichnet, dass** die Empfangseinheit (44) für einen drahtlosen Signalempfang ausgebildet ist und insbesondere ein Bluetooth-Modul, RFID-Modul und/oder WLAN-Modul aufweist.

5. Schloss (10, 100) nach zumindest einem der vorstehenden Ansprüche, **dadurch gekennzeichnet, dass** die Sperreinrichtung ein Authentifizierungsmodul zur Authentifizierung eines empfangenen Freigabesignals umfasst.

6. Schloss (10, 100) nach zumindest einem der vorstehenden Ansprüche, **dadurch gekennzeichnet, dass** der Verriegelungsmechanismus ein Betätigungsmittel (24) für eine manuelle Bewegung des Riegels (14) in die Entriegelungsposition aufweist.

7. Schloss (10, 100) nach Anspruch 6,
**dadurch gekennzeichnet,**
**dass** das Betätigungsmittel (24) zur Übertragung einer translatorischen Betätigungsbewegung auf den Riegel (14) ausgebildet ist; und/oder
**dass** das Betätigungsmittel (24) zur Übertragung einer rotatorischen Betätigungsbewegung auf den Riegel (14) ausgebildet ist.

8. Schloss (10, 100) nach zumindest einem der vorstehenden Ansprüche, **dadurch gekennzeichnet, dass** das Sperrelement (36) zum Sperren des Riegels in der Verriegelungsposition mit dem Verriegelungsmechanismus, insbesondere mit einem Betätigungsmittel (24), einer Handhabe (26), einem Drehmomentübertragungselement (28) und/oder mit dem Riegel (14), in Eingriff bringbar ist.

9. Schloss (10, 100) nach zumindest einem der vorstehenden Ansprüche, **dadurch gekennzeichnet, dass** ein Verstellen des Sperrelements (36) zwischen der Sperrstellung und der Freigabestellung eine Linearbewegung des Sperrelements (36), insbesondere entlang einer Längsachse des Sperrelements (36), umfasst.

10. Schloss (10, 100) nach zumindest einem der vorstehenden Ansprüche, **dadurch gekennzeichnet, dass** ein Verstellen des Sperrelements (36) zwischen der Sperrstellung und der Freigabestellung eine Rotations- und/oder Translationsbewegung des Sperrelements (36) umfasst.

11. Schloss (10, 100) nach zumindest einem der vorstehenden Ansprüche, **dadurch gekennzeichnet, dass** der Riegel (14) dazu vorgesehen ist, in seiner Verriegelungsposition in eine Aussparung (18) des Energiespeichers (12) oder des Gegenstücks einzugreifen.

12. Schloss (10, 100) nach zumindest einem der vorstehenden Ansprüche, **dadurch gekennzeichnet, dass** die Vorrichtung (10) einen Notauslösemechanismus (48) zur Entriegelung des Verriegelungsmechanismus bei in Sperrstellung befindlichem Sperrelement (36) aufweist.

13. Schloss (10, 100) nach Anspruch 12,
**dadurch gekennzeichnet,**
**dass** der Notauslösemechanismus (48) einen Schließzylinder (50) für eine Entriegelung des Verriegelungsmechanismus mittels eines Schlüssels umfasst; oder
**dass** der Notauslösemechanismus (48) eine Kupplungseinrichtung (52) umfasst, die zwischen die Sperreinrichtung (34) und den Riegel (14) geschaltet und dazu ausgebildet ist, bei Betätigung des Notauslösemechanismus (48) und in Sperrstellung befindlichem Sperrelement (36) eine Bewegung des Riegels (14) zu gestatten.

14. Schließsystem (70), umfassend
zumindest ein Schloss (10, 100) nach zumindest einem der vorstehenden Ansprüche,
eine Energieversorgung (74),
eine Zentraleinheit (76).

## Claims

1. A lock (10, 100), in particular for an electric bicycle, comprising
a locking mechanism that has a latch (14) that is movable between a latched position, which is provided for securing a counter-piece movable relative to the locking mechanism, and an unlatched position provided for releasing the counter-piece,
**characterized by**
a blocking device (34), comprising
a blocking element (36) which is adjustable between a blocking position, in which the latch is blocked in its latched position, and a release position in which the latch (14) is movable into its unlatched position; and
a reception unit (44) for receiving a release signal by which the adjustment of the blocking element (36) into the release position can be brought about,
**characterized in that**
the latch (14) can be brought from the latched position into the unlatched position against a restoring force of a spring (19), with the latch (14) being preloaded by the spring (19) which urges said latch into the latched position.

2. A lock (10, 100) in accordance with claim 1,
**characterized in that**
the counter-piece is an energy store or a component of an energy store, or a bolt of a frame lock or of a brake disk lock, or a closing hoop or a catch of a case lock, in each case in particular of an electric bicycle.

3. A lock (10, 100) in accordance with claim 1 or claim 2,
**characterized in that** the blocking device (34) comprises an actuator (42), in particular an electromechanical or electromagnetic actuator, for adjusting the blocking element (36).

4. A lock (10, 100) in accordance with at least one of the preceding claims, **characterized in that** the reception unit (44) is configured for a wireless signal reception and in particular has a Bluetooth module, an RFID module and/or a WLAN module.

5. A lock (10, 100) in accordance with at least one of the preceding claims, **characterized in that** the blocking device comprises an authentication module for authenticating a received release signal.

6. A lock (10, 100) in accordance with at least one of the preceding claims, **characterized in that** the locking mechanism has an actuation means (24) for a manual movement of the latch (14) into the unlatched position.

7. A lock (10, 100) in accordance with claim 6,
**characterized in that** the actuation means (24) is configured for the transmission of a translatory actuation movement to the latch (14); and/or in that the actuation means (24) is configured for the transmission of a rotary actuation movement to the latch (14).

8. A lock (10, 100) in accordance with at least one of the preceding claims, **characterized in that**, in order to block the latch in the latched position, the blocking element (36) can be brought into engagement with the locking mechanism, in particular with an actuation means (24), with a handle (26), with a torque transmission element (28) and/or with the latch (14).

9. A lock (10, 100) in accordance with at least one of the preceding claims, **characterized in that** an adjustment of the blocking element (36) between the blocking position and the release position comprises a linear movement of the blocking element (36), in particular along a longitudinal axis of the blocking element (36).

10. A lock (10, 100) in accordance with at least one of the preceding claims, **characterized in that** an adjustment of the blocking element (36) between the blocking position and the release position comprises a rotational movement and/or a translational movement of the blocking element (36).

11. A lock (10, 100) in accordance with at least one of the preceding claims, **characterized in that** the latch (14) is provided to engage, in its latched position, into a recess (18) of the energy store (12) or of the counter-piece.

12. A lock (10, 100) in accordance with at least one of the preceding claims, **characterized in that** the apparatus (10) has an emergency release mechanism (48) for unlocking the locking mechanism when the blocking element (36) is in the blocking position.

13. A lock (10, 100) in accordance with claim 12,
**characterized in that**
the emergency release mechanism (48) comprises a lock cylinder (50) for an unlocking of the locking mechanism by means of a key; or
**in that** the emergency release mechanism (48) comprises a coupling device (52) which is connected between the blocking device (34) and the latch (14) and which is configured to allow a movement of the latch (14) when the emergency release mechanism (48) is actuated and when the blocking element (36) is in the blocking position.

14. A locking system (70), comprising
at least one lock (10, 100) in accordance with at least one of the preceding claims;
an energy supply (74); and
a central unit (76).

## Revendications

1. Serrure (10, 100), en particulier pour un vélo électrique, comprenant
un mécanisme de verrouillage qui comporte un pêne (14) pouvant se déplacer entre une position de verrouillage destinée à immobiliser une pièce complémentaire mobile par rapport au mécanisme de verrouillage et une position de déverrouillage destinée à libérer ladite pièce complémentaire, **caractérisée par**
un dispositif de blocage (34) comprenant
un élément de blocage (36) pouvant être déplacé entre une position de blocage, dans laquelle le pêne est bloqué dans sa position de verrouillage, et une position de libération, dans laquelle le pêne (14) peut être déplacé vers sa position de déverrouillage, et
une unité de réception (44) destinée à recevoir un signal de libération, grâce auquel le déplacement de l'élément de blocage (36) vers la position de libération peut être provoqué,
**caractérisée en ce que**
le pêne (14) peut être amené de la position de verrouillage à la position de déverrouillage à l'encontre d'une force de rappel d'un ressort (19), le pêne (14) étant précontraint par le ressort (19) qui le pousse vers la position de verrouillage.

2. Serrure (10, 100) selon la revendication 1,
**caractérisée en ce que**
la pièce complémentaire est un accumulateur d'énergie ou un composant d'un accumulateur d'énergie, ou un loquet d'une serrure de cadre ou d'une serrure de disque de frein, ou un étrier de fermeture ou un cliquet d'une serrure de valise, dans chaque cas notamment d'un vélo électrique.

3. Serrure (10, 100) selon la revendication 1 ou 2,
**caractérisée en ce que** le dispositif de blocage (34) comprend un actionneur (42), notamment un actionneur électromécanique ou électromagnétique, destiné à déplacer l'élément de blocage (36).

4. Serrure (10, 100) selon l'une au moins des revendications précédentes, **caractérisée en ce que** l'unité de réception (44) est conçue pour la réception de signaux sans fil et comporte notamment un module Bluetooth, un module RFID et/ou un module Wi-Fi.

5. Serrure (10, 100) selon au moins l'une des revendications précédentes, **caractérisée en ce que** le dispositif de blocage comprend un module d'authentification destiné à authentifier un signal de libération reçu.

6. Serrure (10, 100) selon l'une au moins des revendications précédentes, **caractérisée en ce que** le mécanisme de verrouillage comporte un moyen d'actionnement (24) permettant de déplacer manuellement le pêne (14) vers la position de déverrouillage.

7. Serrure (10, 100) selon la revendication 6,
**caractérisée en ce**
**que** le moyen d'actionnement (24) est conçu pour transmettre un mouvement d'actionnement en translation au pêne (14) ; et/ou
en ce que le moyen d'actionnement (24) est conçu pour transmettre un mouvement d'actionnement rotatif au pêne (14).

8. Serrure (10, 100) selon l'une au moins des revendications précédentes, **caractérisée en ce que** l'élément de blocage (36), destiné à bloquer le pêne en position de verrouillage, peut être mis en prise avec le mécanisme de verrouillage, en particulier avec un moyen d'actionnement (24), une poignée (26), un élément de transmission de couple (28) et/ou avec le pêne (14).

9. Serrure (10, 100) selon l'une au moins des revendications précédentes, **caractérisée en ce que** le déplacement de l'élément de blocage (36) entre la position de blocage et la position de libération comprend un mouvement linéaire de l'élément de blocage (36), notamment le long d'un axe longitudinal de l'élément de blocage (36).

10. Serrure (10, 100) selon l'une au moins des revendications précédentes, **caractérisée en ce que** le déplacement de l'élément de blocage (36) entre la position de blocage et la position de libération comprend un mouvement de rotation et/ou de translation de l'élément de blocage (36).

11. Serrure (10, 100) selon l'une au moins des revendications précédentes, **caractérisée en ce que** le pêne (14) est prévu pour s'engager, dans sa position de verrouillage, dans un évidement (18) de l'accumulateur d'énergie (12) ou de la pièce complémentaire.

12. Serrure (10, 100) selon l'une au moins des revendications précédentes, **caractérisée en ce que** le dispositif (10) comporte un mécanisme de déclenchement d'urgence (48) destiné à déverrouiller le mécanisme de verrouillage lorsque l'élément de blocage (36) se trouve en position de blocage.

13. Serrure (10, 100) selon la revendication 12,
caractérisée en ce
le mécanisme de déclenchement d'urgence (48) comprend un cylindre de serrure (50) permettant de déverrouiller le mécanisme de verrouillage à l'aide d'une clé ; ou
en ce que le mécanisme de déclenchement d'urgence (48) comprend un dispositif d'accouplement (52) qui est intercalé entre le dispositif de blocage (34) et le pêne (14) et qui est conçu pour permettre le déplacement du pêne (14) lorsque le mécanisme de déclenchement d'urgence (48) est actionné et que l'élément de blocage (36) se trouve en position de blocage.

14. Système de fermeture (70) comprenant
au moins une serrure (10, 100) selon l'une au moins des revendications précédentes,
une alimentation en énergie (74),
une unité centrale (76).
